# EUROPÄISCHE PATENTSCHRIFT

(11) **EP 2 042 898 B1**
(45) Veröffentlichungstag und Bekanntmachung des Hinweises auf die Patenterteilung: **13.03.2013**
(21) Anmeldenummer: 08164447.8
(22) Anmeldetag: 16.09.2008
(51) Int. Cl.: G02B 6/00, F21V 8/00

(54) **Lichtquelle mit Konversionselement und Lichtwellenleiter**
Light source with conversion element and fibre optic cable
Source lumineuse dotée d'un élément de conversion et d'un conducteur d'ondes lumineuses

(30) Priorität: 28.09.2007 DE 102007046611
(43) Veröffentlichungstag der Anmeldung: 01.04.2009
(73) Patentinhaber: OSRAM Opto Semiconductors GmbH, 93055 Regensburg (DE)
(72) Erfinder: Moosburger, Jürgen, 93055 Regensburg (DE)
(74) Vertreter: Epping - Hermann - Fischer

(56) Entgegenhaltungen:
- EP-A- 1 734 302
- WO-A-98/12757
- WO-A-03/021329
- JP-A- 2005 328 921

## Beschreibung

Die Erfindung bezieht sich auf eine Lichtquelle mit Konversionselement, bei der zumindest ein Teil einer von einer Halbleiterlichtquelle ausgesandten Primärstrahlung wellenlängenkonvertiert wird.

Ein Bauelement mit Konversionselement ist beispielsweise aus der WO 97/50132 bekannt. Es umfasst einen Halbleiterchip, der im Betrieb eine Primärstrahlung aussendet, und ein auf Lumineszenz beruhendes Konversionselement, durch das ein Teil der Primärstrahlung in ein Licht von anderer Wellenlänge konvertiert wird. Die resultierende optisch wahrnehmbare Strahlung der Halbleiterlichtquelle ergibt sich durch eine Überlagerung der Primärstrahlung und der Sekundärstrahlung beziehungsweise konvertierten Strahlung, so dass sich dadurch insbesondere auch weißes Licht abstrahlende Lichtquellen erzeugen lassen. Die in dem Konversionselement erzeugte Strahlungskonversion beruht dabei auf Lumineszenz oder Fluoreszenz.

Die Druckschrift EP 1 734 302 A1 betrifft ein Licht emittierendes Bauteil.

In der Druckschrift WO 03/021329 A2 ist eine Festkörperlichtquelle beschrieben.

Der Erfindung liegt die Aufgabe zugrunde, eine andere Möglichkeit für eine Lichtquelle mit einem Konversionselement sowie mit einem Lichtwellenleiter anzugeben.

Diese Aufgabe wird gelöst durch eine Lichtquelle mit den Merkmalen des unabhängigen Patentanspruchs.

Es umfasst die Lichtquelle eine Halbleiterlichtquelle und einen Lichtwellenleiter, wobei ein Konversionselement an einem Ende des Lichtwellenleiters und die Halbleiterlichtquelle am anderen Ende des Lichtwellenleiters angeordnet sind.

Die Lichtquelle, bei der ein Konversionselement an einem stirnseitigen Ende eines Lichtwellenleiters angeordnet ist und am anderen Ende des Lichtleiters eine Halbleiterlichtquelle Licht in den Lichtwellenleiter einkoppelt, ermöglicht es, die aus der Primärstrahlung der Halbleiterlichtquelle und der Sekundärstrahlung des Konversionselements durch Überlagerung gebildete Mischstrahlung mit wenig Aufwand an vorgegebenen Orten abzustrahlen. Die Lichtquelle macht es weiterhin möglich, nahezu punktförmiges Licht, das letztlich nur vom Durchmesser beziehungsweise dem Strahlung leitenden Kerndurchmesser des Lichtwellenleiters abhängt, zu erzeugen. Das stirnseitige Ende wird auch Facette des Lichtwellenleiters beziehungsweise der Lichtleitfaser genannt.

Ein besonderer Vorteil der Lichtquelle besteht darin, dass mit einer Mehrzahl entsprechend angeordneter Lichtwellenleiter mit aufgebrachten Konversionselementen und nur einer einzigen Halbleiterlichtquelle eine entsprechende Mehrzahl von im Wesentlichen punktförmigen Lichtquellen erzeugt werden kann. Als Halbleiterlichtquelle wird bevorzugt eine Laserdiode eingesetzt, deren Primärstrahlung sehr effizient in den Lichtwellenleiter eingekoppelt werden kann und durch den Lichtwellenleiter übertragen werden kann.

Durch die Wahl des Konversionselements beziehungsweise des Leuchtstoffs lässt sich am anderen Ende des Lichtwellenleiters der Farbort nach der CIE-Farbtafel an die gewünschten Anforderungen anpassen.

Gemäß zumindest einer Ausführungsform der Lichtquelle enthält das Konversionselement mindestens einen Leuchtstoff aus der Gruppe der Chlorosilikate, Orthosilikate, Sulfide, Thiometalle und Vanadate, Aluminate, Oxide, Halophosphate, Nitride, Sione und Sialone, Granate der Seltenen Erden wie YAG:Ce und der Erdalkalielemente.

Besonders vorteilhaft wird das Konversionselement mit Hilfe eines Leuchtstoffs gebildet, der in einer Matrixsubstanz eingebettet ist. Als Leuchtstoff eignen sich beispielsweise anorganische Leuchtstoffe, wie mit seltenen Erden, insbesondere Ce, dotierte Granate, oder organische Leuchtstoffe, wie Perylen-Leuchtstoffe. Weitere geeignete Leuchtstoffe sind beispielsweise in der WO 98/12757 aufgeführt, deren Inhalt insofern hiermit durch Rückbezug aufgenommen wird.

Eine vorteilhafte Lichtquelle enthält einen Konverter mit YAG:Ce, einem Granat der Seltenen Erden, als typischen Leuchtstoff und erzeugt in Verbindung mit einem blaue Primärstrahlung abstrahlenden Halbleiterbauelement weißes Mischlicht. Als Halbleiterbauelement kommt eine Laserdiode oder eine Leuchtdiode in Frage.

Weitere für Konverter geeignete Leuchtstoffe und Leuchtstoffmischungen sind: Chlorosilikate, Orthosilikate, Sulfide, Thiometalle und Vanadate, Aluminate, Oxide, Halophosphate, Nitride, Sione und Sialone, Granate der Seltenen Erden und der Erdalkalielemente. Die Aufzählung ist nicht abschließend.

Die vollflächige Beschichtung des stirnseitigen Endes des Lichtwellenleiters ermöglicht es, die durch den Lichtwellenleiter durchtretende Primärstrahlung effizient für die Strahlungskonversion einzusetzen und damit eine effiziente Lichtquelle zu schaffen.

Es weist der Lichtwellenleiter an dem dem Konversionselement zugeordneten Ende eine Wärme leitende Schicht auf. Dadurch wird es möglich, eine Erwärmung des Konversionselements durch die eingestrahlte Primärstrahlung zu begrenzen und damit die Effizienz des Konverters zu erhöhen.

Der Lichtwellenleiter ist an dem das Konversionselement aufweisenden Ende mit der Wärme leitenden Schicht vollständig zu ummantelt. Das heißt, die Seitenflächen des Lichtwellenleiters sind zumindest an diesem Ende vollständig vom Material der Wärme leitenden Schicht bedeckt.

Es enthält die Wärme leitende Schicht ein Metall. Es enthält die Wärme leitende Schicht Gold oder Aluminium.

Es hat die Wärme leitende Schicht eine vorgegebene Länge entlang des Mantels des Lichtwellenleiters. Dadurch wird es möglich, einerseits das Konversionselement effizient zu kühlen und andererseits nicht unnötig Wärme leitendes Material einzusetzen. Das heißt, der Lichtwellenleiter ist nicht vollständig mit der Wärme leitende Schicht ummantelt, sonder nur entlang einer bestimmten Länge, die vom verwendeten Material für die Wärme leitende Schicht abhängen kann.

Ein Lichtwellenleiter gemäß der Erfindung ist an einem stirnseitigen Ende mit einem Konversionselement beschichtet. Bei einer insbesondere vollflächigen Beschichtung wird die am Ende des Lichtwellenleiters auf das Konversionselement auftreffende Primärstrahlung sehr effizient für die Erzeugung der Sekundärstrahlung eingesetzt.

Der Lichtwellenleiter ist an dem Ende, das mit dem Konversionselement beschichtet wird, zusätzlich mit einer Wärme leitenden Schicht versehen und ummantelt, so dass die in dem Konversionselement durch die eingekoppelte Primärstrahlung entstehende Wärme möglichst effizient abgeleitet wird, um das Konversionselement zu kühlen. Als besonders effiziente Kühlung erweist sich eine Wärme leitende Schicht, die als Metall aus Gold oder Aluminium besteht.

Besonders Ressourcen schonend und kostengünstig ist ein Lichtwellenleiter, bei dem die Wärme leitende Schicht eine vorgegebene Länge entlang des Mantels des Lichtwellenleiters hat. Dadurch wird es möglich, einerseits das Konversionselement effizient zu kühlen und andererseits nicht unnötig Wärme leitendes Material einzusetzen.

Der Lichtwellenleiter wird besonders bevorzugt mit einem Konversionselement beschichtet, das einen Leuchtstoff aus der Gruppe der Chlorosilikate, Orthosilikate, Sulfide, Thiometalle und Vanadate, Aluminate, Oxide, Halophosphate, Nitride, Sione und Sialone, Granate der Seltenen Erden wie YAG:Ce und der Erdalkalielemente enthält.

Als sehr vorteilhaft erweist es sich, einen Lichtwellenleiter mit einem Konversionselement an einem stirnseitigen Ende zu konfektionieren und an dem anderen Ende einen Stecker, insbesondere einen Standardstecker anzuordnen. Somit ist es möglich, den Lichtwellenleiter an beliebige andere Lichtwellenleiter anzukoppeln und damit die Einsatzmöglichkeiten des Lichtwellenleiters zu vergrößern sowie für längere Lichtübertragungsstrecken eine besonders kostengünstige Lösung zu schaffen.

Bei einem Verfahren zur Herstellung einer Lichtquelle mit einem Lichtwellenleiter erweist es sich als besonders vorteilhaft, ein stirnseitiges Ende des Lichtwellenleiters insbesondere vollflächig mit einem Konversionselement zu beschichten und damit die an diesem Ende austretende Primärstrahlung sehr effizient zur Strahlungskonversion zu nutzen. Das Konversionselement kann mit einem Klebstoff oder mittels der den Leuchtstoff einbettenden Matrixsubstanz auf die Stirnseite des Lichtwellenleiters geklebt werden.

Die Verwendung einer Lichtquelle in Anzeigevorrichtungen und insbesondere in der Automobiltechnik besitzt den Vorteil, dass mit nur einer Halbleiterlichtquelle und einer Mehrzahl von daran angekoppelten Lichtwellenleitern, an deren freien Ende jeweils Konversionselemente angeordnet sind, an verschiedenen Orten Lichtquellen geschaffen werden können.

Weitere Vorteile und bevorzugte Ausführungsformen ergeben sich aus der nachfolgenden Beschreibung der Ausführungsbeispiele in Verbindung mit den Figuren 1 bis 6. Die Figuren sind rein schematisch und nicht maßstäblich. Es zeigen:
- Figur 1: eine schematische Darstellung der Lichtquelle mit Wärme leitender Schicht am konverterseitigen Ende,
- Figur 2: eine schematische Ansicht des Lichtwellenleiters mit Wärme leitender Schicht,
- Figur 3: einen schematischer Kurvenverlauf zur Darstellung der Abhängigkeit der Konvertertemperatur von der Länge der Wärme leitenden Schicht,
- Figur 4: ein Diagramm zur Darstellung der Konvertertemperatur in Abhängigkeit von der Manteldicke der Wärme leitenden Schicht und einem ersten Durchmesser des Lichtwellenleiters und
- Figur 5: ein entsprechendes Diagramm wie in Figur 4 bei einem anderen Durchmesser des Lichtwellenleiters.
- Figur 6: eine schematische Darstellung der Lichtquelle mit einer Mehrzahl von Lichtwellenleitern.

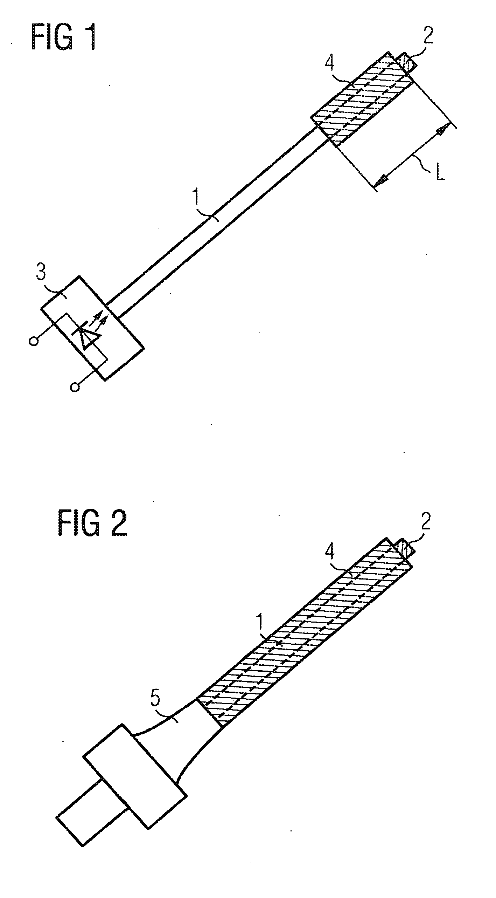

Figur 1 zeigt eine Lichtquelle, bei der ein Lichtwellenleiter 1 an einem Ende stirnseitig mit einem Konversionselement 2 beschichtet ist, während an dem anderen Ende des Lichtwellenleiters 1 eine Halbleiterlichtquelle 3 angeordnet ist. Die Halbleiterlichtquelle koppelt Licht einer Primärstrahlung in den Lichtwellenleiter ein, das beim Austritt aus dem Lichtwellenleiter am konverterseitigen Ende zumindest teilweise zur Anregung des Leuchtstoffs in dem (Lumineszenz-)Konverter eingesetzt wird. Der Leuchtstoff konvertiert das eingestrahlte Licht in eine Sekundärstrahlung, so dass sich beim Austritt aus dem Lichtwellenleiter Primärstrahlung und Sekundärstrahlung überlagern und ein Mischlicht erzeugen. Vorzugsweise wird der Leuchtstoff in eine Matrix eingebettet.

Zur besseren Ableitung der in dem Konverter entstehenden Wärme ist eine Wärme leitende Ummantelung 4 des Lichtwellenleiters vorgesehen. Die Ummantelung ist so ausgeführt, dass sie die in dem Konverter entstehende Wäre effizient ableitet, insbesondere durch unmittelbaren Kontakt mit dem Lumineszenzkonverter 2. Die Wärme leitende Schicht 4 erstreckt sich nur über eine für eine effiziente Wärmeableitung notwendige Länge über den Lichtwellenleiter. Die Wärme leitende Schicht 4 ist gemäß der Erfindung als metallische Schicht aus Gold oder Aluminium ausgebildet.

Figur 2 zeigt schematisch einen Lichtwellenleiter 1 mit einem Konverter 2, bei dem zur besseren Ableitung der in dem Konverter entstehenden Wärme eine Wärme leitende Ummantelung des Lichtwellenleiters vorgesehen ist. Die Ummantelung ist so ausgeführt, dass sie unmittelbar Kontakt mit dem Lumineszenzkonverter 2 hat. Die Wärme leitende Schicht 4 ist als metallische Schicht aus Gold oder Aluminium ausgebildet. Der nur kurze Lichtwellenleiter kann mittels eines Koppelsteckers 5 am dem Konverter 2 entgegengesetzten Ende, insbesondere mittels eines Standardsteckers wie eines FC- oder SMA-Steckers, an Standard-Lichtwellenleiter angekoppelt werden.

Es hat sich herausgestellt, wie auch in Figur 1 dargestellt, dass die Wärme leitende Schicht nur eine vorgegebene Länge zu haben braucht und eine darüber hinaus gehende Schichtlänge keine wesentliche Verbesserung der Wärmeabfuhr mehr bringt. Die optimale Länge der Wärme leitenden Schicht hängt von dem Wärme leitenden Material, von der Dicke der Wärme leitenden Ummantelung und von der Wellenlänge der eingestrahlten Primärstrahlung ab. Weiterhin hängt die Dimensionierung der Wärme leitenden Ummantelung von dem Konverter des (Lumineszenz-) Konverters ab.

Bei der Dimensionierung der Wärme leitenden Schicht 4 ist zu berücksichtigen, dass der Konverter eine von dem Konvertertyp und der Anregungswellenlänge der Halbleiterlichtquelle abhängige Anfangseffizienz unter 100 % besitzt und er sich deshalb erwärmt. Diese Erwärmung wird durch die Kühlung des Wärme leitenden Materials aufgefangen. Ansonsten würde sich die Effizienz des erwärmten Leuchtstoffs weiter verringern und durch ein weiterer Anstieg der Erwärmung erfolgen und so weiter (positive Rückkopplung).

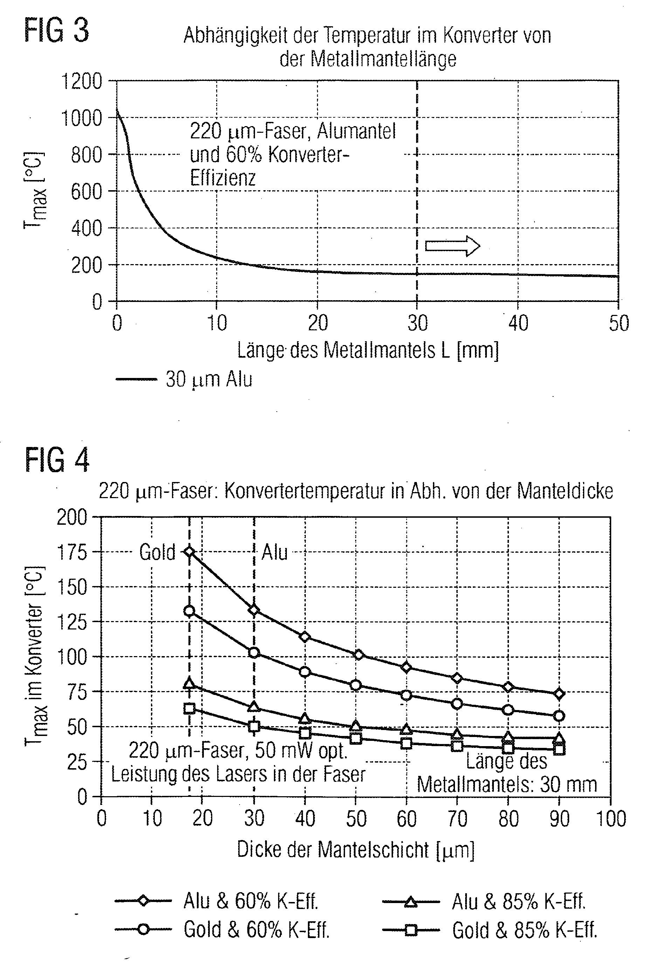

Den in den Figuren 3 bis 5 dargestellten Parameterkurven zur Dimensionierung der Wärme leitenden Schicht sind die Erwärmung einer Konverterschicht auf einer Multimode-Lichtwellenleiterfacette bei unterschiedlichen Betriebsparametern zu entnehmen. Als Parameter dienen der Durchmesser des Lichtwellenleiters, die Dicke und das Material der Wärme leitenden Mantelschicht und die Konversionseffizienz des Lumineszenzkonverters. Dabei wird eine Primärstrahlung von 50 mW optischer Leistung eines blauen Lasers angenommen, die vollständig in den Lichtwellenleiter eingekoppelt wird. Dargestellt sind die Fälle, in denen bei einer Anregungswellenlänge von 390 nm 40 % der optischen Leistung in thermische Verlustleistung umgesetzt wird und bei einer Anregungswellenlänge von 440 nm 15 % in thermische Verlustleistung umgesetzt wird. Es ergeben sich Effizienzen von 60 % beziehungsweise 85 %.

Die Darstellungen beziehen sich auf einer Abwandlung eines Lichtwellenleiters mit einem Kerndurchmesser von 100 µm und einem Gesamtdurchmesser von 110 µm beziehungsweise einen erfindungsgemäßen Lichtwellenleiter mit jeweils dem doppelten Durchmesser, also mit 220 µm Gesamtdurchmesser.

Die Temperatur des Lumineszenzkonverters sollte 100° C nicht überschreiten, um die Konvertereffizienz nicht unnötig zu beeinträchtigen. Den Kurven der Figuren 3 bis 5 ist zu entnehmen, dass sowohl für einen Lichtwellenleiter mit 220 µm Durchmesser als auch von 110 µm bereits die kommerziell erhältlichen Standard-Metallisierungsdicken von 17 µm Gold beziehungsweise 30 µm Aluminium für eine effiziente Kühlung des Lumineszenzkonverters bei einer Wellenlänge von 440 nm in Rahmen der Dimensionierungsgenauigkeit ausreichen. Bei einer Anregungswellenlänge von 390 nm und einer Konvertereffizienz von nur noch 60 % muss die Dicke der Metallisierung abhängig von dem Durchmesser des Lichtwellenleiters für Gold sowie auch für Aluminium deutlich größer sein. Numerische Werte für die Dicke der Metallisierung in µm, bezogen auf eine Konvertertemperatur < 100°C und Raumtemperatur, sind in der nachfolgenden Tabelle aufgeführt:

| | λ = 390nm / | | λ = 440 nm / | |
|---|---|---|---|---|
| | Eff. = 60 % | | Eff. = 85 % | |
| | Gold | Aluminium | Gold | Aluminium |
| Durchmesser 220 µm | 30 | 50 | 18 | 18 |
| Durchmesser 110 µm | 60 | 85 | 18 | 25 |

Es hat sich weiter herausgestellt, dass die Konvertertemperatur bereits ab einer Länge L des Wärme leitenden Metallmantels von 30 mm bei Aluminium beziehungsweise 20 mm bei Gold, berechnet vom Konverter an der Facette des Lichtwellenleiters beziehungsweise dessen stirnseitigen Endes parallel zur Hauptachsenrichtung des Lichtwellenleiters, unabhängig von der Länge wird. Es reicht also aus, nur ein kurzes Stück des Lichtwellenleiters mit Metall zu ummanteln.

Dieses kurze Faserstück kann mittels eines Koppelsteckers 5, insbesondere eines Standardsteckers wie eines FC- oder SMA-Steckers, an Standard-Lichtwellenleiter angekoppelt werden, siehe Figur 2, wodurch die Kosten der gesamten Lichtquelle günstig beeinflusst werden können.

Es erweist sich eine Länge L der Wärme leitenden Schicht 4 für eine Wärme leitende Schicht 4, die aus Gold besteht, zwischen wenigstens 20 mm und höchstens 30 mm als besonders vorteilhaft. Ebenso erweist sich eine Länge L der Wärme leitenden Schicht 4 für eine Wärme leitende Schicht 4, die aus Aluminium besteht, zwischen wenigstens 30 mm und höchstens 40 mm als besonders vorteilhaft.

Bevorzugt wird die Wärme leitende Schicht 4 strukturiert auf den Lichtwellenleiter aufgebracht. Das heißt, der Lichtwellenleiter wird nicht zunächst vollständig mit dem Material der Wärme leitende Schicht 4 beschichtet und die derart aufgebrachte Schicht dann strukturiert, sondern die Wärme leitende Schicht 4 wird direkt in der gewünschten Länge L und mit der gewünschten Dicke aufgebracht.

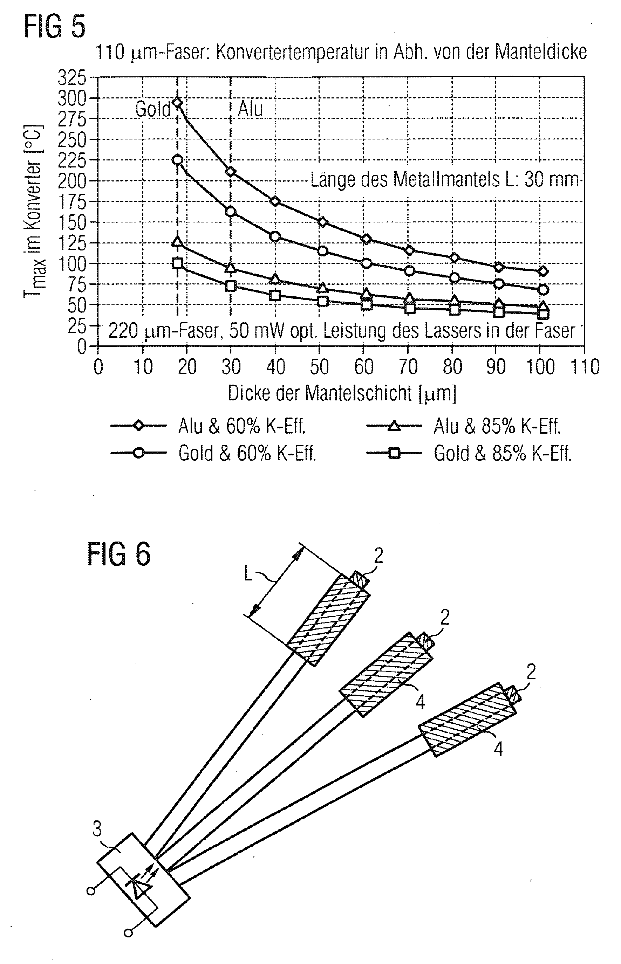

In Verbindung mit der Figur 6 ist ein Ausführungsbeispiel einer hier beschriebenen Lichtquelle näher erläutert, bei der eine Mehrzahl von Lichtwellenleitern 1 - hier beispielhaft drei Lichtwellenleiter 1 - an die selbe Halbleiterlichtquelle 3 optisch angeschlossen sind. Am stirnseitigen Ende eines jeden Lichtwelleleiters 1 ist ein Konversionselement 2 angeordnet. Bei den Konversionselementen 2 kann es sich um unterschiedliche Konversionselemente handeln, so dass jedes Konversionselement 2 Licht einer anderen Farbe abstrahlen kann. Ferner ist jeder Lichtwelleleiter 1 bis zu einer bestimmten Länge L mit einer Wärme leitenden Schicht 4 ummantelt. Die Lichtwellenleiter 1 sind dabei vorzugsweise nicht über ihre gesamte Länge mit dem Material der Wärme leitenden Schicht 4 beschichtet. Auf diese Weise sind die Lichtwellenleiter 1 - zumindest in Bereichen ohne Wärme leitenden Schicht 4 - besonders flexibel.

## Patentansprüche

1. Lichtquelle mit
- einer Halbleiterlichtquelle (3) und
- zumindest einem Lichtwellenleiter (1), wobei
- ein Konversionselement (2) an einem Ende des zumindest einen Lichtwellenleiters (1) und die Halbleiterlichtquelle (3) am anderen Ende des zumindest einen Lichtwellenleiters (1) angeordnet sind,
- der Lichtwellenleiter (1) eine Wärme leitende Schicht (4) zur Abfuhr der Wärme des Konversionselements umfasst,
- die Wärme leitende Schicht (4) den Lichtwellenleiter (1) am konversionselementseitigen Ende vollständig ummantelt, und
- die Wärme leitende Schicht (4) ein Metall enthält,
**dadurch gekennzeichnet, dass**
- die Wärme leitende Schicht (4) aus Gold besteht, eine Länge (L) von wenigstens 20 mm und höchstens 30 mm und eine Dicke von wenigstens 30 µm aufweist, oder
- die Wärme leitende Schicht aus Aluminium besteht, eine Länge (L) von wenigstens 30 mm und höchstens 40 mm aufweist und eine Dicke von wenigstens 50 µm aufweist,
wobei jeweils eine Konvertereffizienz 60 % beträgt, der Lichtwellenleiter (1) einen Gesamtdurchmesser von 220 µm aufweist und von der Halbleiterlichtquelle (3) eine Primärstrahlung mit einer optischen Leistung von 50 mW erzeugt wird.

2. Lichtquelle nach Anspruch 1,
bei der die Halbleiterlichtquelle eine Laserdiode ist.

3. Lichtquelle nach Anspruch 1 oder 2,
bei der die Halbleiterlichtquelle blaue Primärstrahlung in den Lichtwellenleiter (1) einkoppelt.

4. Lichtquelle nach einem der Ansprüche 1 bis 3,
bei der der Lichtwellenleiter (1) stirnseitig vollflächig mit dem Konversionselement beschichtet ist.

5. Lichtquelle nach Anspruch 1,
bei der sich die Wärme leitende Schicht (4) in direktem Kontakt mit der Lichtwellenleiter (1) und dem Konversionselement (2) befindet.

6. Lichtquelle nach einem der vorherigen Ansprüche,
mit einer Mehrzahl von Lichtwellenleiter (1) und genau einer Halbleiterlichtquelle (3), wobei alle Lichtwellenleiter (1) optisch an die Halbleiterlichtquelle (3) angeschlossen sind.

## Claims

1. Light source comprising
- a semiconductor light source (3) and
- at least one optical waveguide (1), wherein
- a conversion element (2) is arranged at one end of the at least one optical waveguide (1) and the semiconductor light source (3) is arranged at the other end of the at least one optical waveguide (1),
- the optical waveguide (1) comprises a heat-conducting layer (4) for dissipating the heat of the conversion element,
- the heat-conducting layer (4) completely envelopes the optical waveguide (1) at the end associated with the conversion element, and
- the heat-conducting layer (4) contains a metal,
**characterized in that**
- the heat-conducting layer (4) consists of gold and has a length (L) of at least 20 mm and at most 30 mm and a thickness of at least 30 µm, or
- the heat-conducting layer consists of aluminium and has a length (L) of at least 30 mm and at most 40 mm and has a thickness of at least 50 µm,
wherein in each case a converter efficiency is 60%, the optical waveguide (1) has a total diameter of 220 µm and a primary radiation having an optical power of 50 mW is generated by the semiconductor light source (3).

2. Light source according to Claim 1,
wherein the semiconductor light source is a laser diode.

3. Light source according to Claim 1 or 2,
wherein the semiconductor light source couples blue primary radiation into the optical waveguide (1).

4. Light source according to any of Claims 1 to 3,
wherein the optical waveguide (1) is coated with the conversion element over the whole area at the end side.

5. Light source according to Claim 1,
wherein the heat-conducting layer (4) is in direct contact with the optical waveguide (1) and the conversion element (2).

6. Light source according to any of the preceding claims,
comprising a plurality of optical waveguides (1) and exactly one semiconductor light source (3), wherein all the optical waveguides (1) are optically connected to the semiconductor light source (3).

## Revendications

1. Source lumineuse comprenant :
- une source lumineuse à semiconducteur (3), et
- au moins un guide d'ondes optique (1), dans lequel
- un élément de conversion (2) est disposé à une extrémité de l'au moins un guide d'ondes optique (1) et la source lumineuse à semiconducteur (3) est disposée à l'autre extrémité de l'au moins un guide d'ondes optique (1),
- le guide d'ondes optique (1) comprend une couche conductrice de chaleur (4) pour l'évacuation de la chaleur de l'élément de conversion,
- la couche conductrice de chaleur (4) enveloppe entièrement le guide d'ondes optique (1) à l'extrémité située du côté de l'élément de conversion, et
- la couche conductrice de chaleur (4) contient un métal,
**caractérisé en ce que**
- la couche conductrice de chaleur (4) est constituée d'or et présente une longueur (L) d'au moins 20 mm et d'au plus 30 mm et une épaisseur d'au moins 30 µm, ou
- la couche conductrice de chaleur est constituée d'aluminium et présente une longueur (L) d'au moins 30 mm et d'au plus 40 mm et une épaisseur d'au moins 50 µm,
dans lequel l'efficacité de conversion est de 60 %, le guide d'ondes optique (1) présente un diamètre de 220 µm, et un rayonnement primaire ayant une puissance optique de 50 mW est généré par la source lumineuse à semiconducteur (3).

2. Source lumineuse selon la revendication 1, la source lumineuse à semiconducteur étant une diode laser.

3. Source lumineuse selon la revendication 1 ou 2, la source lumineuse à semiconducteur injectant un rayonnement primaire bleu dans le guide d'ondes optique (1).

4. Source lumineuse selon l'une quelconque des revendications 1 à 3, le guide d'ondes optique (1) ayant une surface entièrement revêtue vers l'avant par l'élément de conversion.

5. Source lumineuse selon la revendication 1, la couche conductrice de chaleur (4) se trouvant en contact direct avec le guide d'ondes optique (1) et l'élément de conversion (2).

6. Source lumineuse selon l'une quelconque des revendications précédentes, comprenant une pluralité de guides d'ondes optiques (1) et seulement une source lumineuse à semiconducteur (3), tous les guides d'ondes optiques (1) étant reliés optiquement à la source lumineuse à semiconducteur (3).
